# EUROPEAN PATENT APPLICATION

(11) **EP 2 221 995 A1**
(43) Date of publication of application: **25.08.2010**
(21) Application number: 08858969.2
(22) Date of filing: 12.12.2008
(51) Int. Cl.: H04B 7/26

(54) **WIRELESS COMMUNICATION SYSTEM, CENTRAL STATION, ACCESS DEVICE AND COMMUNICATION METHOD**

(30) Priority: 12.12.2007 CN 200710198769
(71) Applicant: Huawei Technologies Co., Ltd., Longgang District, Shenzhen Guangdong 518129 (CN)
(72) Inventor: YU, Yichuan, Guangdong 518129 (CN)
(74) Representative: Epping - Hermann - Fischer
(86) International application number: PCT/CN2008/073474
(87) International publication number: WO 2009/074116

(57) **Abstract**

A wireless communication system includes a Central Station (CS) capable of the functions of a Base Station Controller (BSC), and at least one access device controlled by the CS. The CS is connected to the at least one access devices through cables. The access device is adapted to: demodulate the downlink wired signals of the CS to downlink Radio Frequency (RF) signals, send the downlink RF signals to the destination wireless user, modulate the uplink RF signals of the wireless user to uplink wired signals, and send the uplink wired signals to the CS. The CS is adapted to: perform baseband processing, Intermediate Frequency (IF) processing, and RF processing for the data provided by the core network to obtain downlink RF signals, modulate the downlink RF signals to downlink wired signals, and send the downlink wired signals to the access device corresponding to the destination wireless user of the data provided by the core network; demodulate the uplink wired signals of the access device to uplink RF signals, perform RF processing, IF processing and baseband processing for the uplink RF signals to obtain the data sent by the wireless user, and submit the data sent by the wireless user to the core network. A CS, a BS, and two communication methods are disclosed herein.

## Description

This application claims priority to Chinese Patent Application No. 200710198769.9, filed with the Chinese Patent Office on December 12, 2007 and entitled "Wireless Communication System, Central Station, Access Device, and Communication Method", which is incorporated herein by reference in its entirety.

### Field of the Invention

The present invention relates to wireless communication technologies, and in particular, to a wireless communication system.

### Background of the Invention

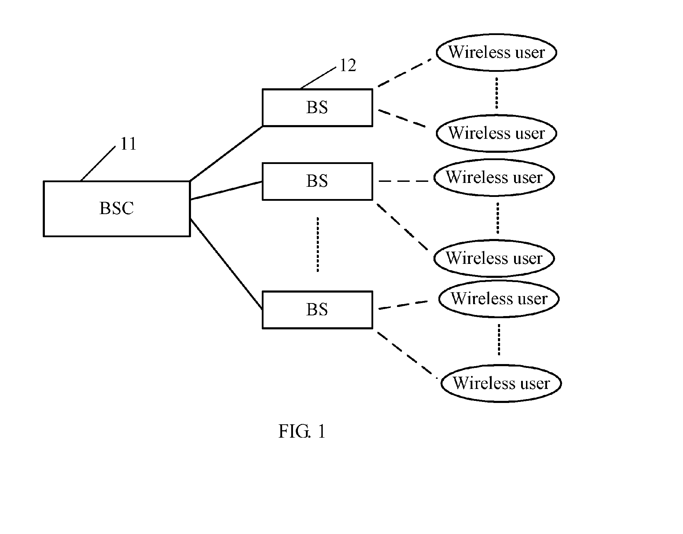

FIG. 1 shows a structure of a wireless communication system in the prior art. As shown in FIG. 1, a Base Station Controller (BSC) 11 controls multiple Base Stations (BSs) 12. The BSC 11 is connected to the BS 12 through fibers or data cables, and all BSs 12 controlled by the BSC 11 share the control signals of the BSC 11. Each BS 12 includes a baseband processing part, an Intermediate Frequency (IF) processing part, and a Radio Frequency (RF) processing part.

The data transmission rate of wireless communications is increasing, and the wireless communication services are required by more and more users in wider areas. Therefore, more BSs need to be added in a specific area to improve the quality and the scope of radio signal coverage. In the process of implementing the present invention, the inventor discovers that in practice, the radio environment in some areas is complicated, and that many buildings exist in such areas. The buildings reflect and shield electromagnetic waves. If BSs are deployed in such areas, it is difficult to implement high-quality transmission and coverage of radio signals, and implement system networking.

### Summary of the Invention

Embodiments of the present invention provide a wireless communication system, a Central Station (CS), an access device, and a communication method to implement high-quality transmission and coverage of radio signals, and implement simplified networking.

A wireless communication system provided in an embodiment of the present invention includes a CS capable of the functions of a BSC, and at least one access device controlled by the CS. The CS is connected to the at least one access device through cable. The at least one access device is adapted to: demodulate downlink wired signals sent by the CS to downlink radio frequency, RF, signals, send the downlink RF signals to a destination wireless user, modulate uplink RF signals sent by the wireless user to uplink wired signals, and send the uplink wired signals to the CS. The CS is adapted to: perform baseband processing, intermediate frequency, IF, processing and RF processing for the data provided by a core network to obtain downlink RF signals, modulate the downlink RF signals to downlink wired signals, send the downlink wired signals to the access device corresponding to the destination wireless user of the data provided by the core network , demodulate the uplink wired signals sent by the access device to uplink RF signals, perform RF processing, IF processing and baseband processing for the uplink RF signals to obtain the data sent by the wireless user, and submit the data sent by the wireless user to the core network.

A CS provided in an embodiment of the present invention includes a modem unit, a baseband processing unit, an IF processing unit, and an RF processing unit. The baseband processing unit is adapted to convert the data provided by a core network into downlink baseband signals; the IF processing unit is adapted to convert the downlink baseband signals into downlink IF signals; the RF processing unit is adapted to convert the downlink IF signals into downlink RF signals; the modem unit is adapted to modulate the downlink RF signals to downlink wired signals; the modem unit is adapted to demodulate the uplink wired signals to uplink RF signals; the RF processing unit is adapted to convert the uplink RF signals into uplink IF signals; the IF processing unit is adapted to convert the uplink IF signals into uplink baseband signals; and the baseband processing unit is adapted to convert the uplink baseband signals into data available to the core network.

An access device provided in an embodiment of the present invention includes a modem unit, which is adapted to modulate the uplink RF signals provided by a wireless user to uplink wired signals, and demodulate the obtained downlink wired signals to downlink RF signals available for being sent to the wireless user.

A communication method provided in an embodiment of the present invention includes: by a CS, obtaining data provided by a core network, and converting the data into wired signals; sending the wired signals to an access device corresponding to a destination wireless user of the data through wired transmission media; and by the access device, demodulating the wired signals to RF signals, and sending the RF signals to the destination wireless user.

Another communication method provided in an embodiment of the present invention includes: by an access device, obtaining RF signals provided by a wireless user, and modulating the RF signals to wired signals; sending the wired signals to a CS through wired transmission media; and, by the CS, converting the wired signals into data available to a core network, and submitting the data to the core network.

In the embodiments of the present invention, the functions of the traditional BSC and the main functions of the BS, such as the baseband processing function, the IF processing function, and the RF processing function, are set in a CS. One CS may use its traditional BSC functions to control multiple access devices capable of signal conversion so as to implement the transparent transmission of data of different rates and different formats, and to implement the dynamical management and allocation optimization of network and frequency resources. Therefore, through the embodiments of the present invention, a specific area requires only one CS and several access devices controlled by the CS, thus making it unnecessary to deploy multiple BSCs or BSs in the area, simplifying the networking and saving the cost.

The access device is incapable of the baseband processing function, the IF processing function, and the RF processing function of a traditional BS, and includes fewer components. Therefore, it is easy to deploy the access device in an indoor or outdoor area unsuitable for deploying the traditional BS, and the signal coverage is widened.

Because the access device is incapable of the baseband processing function, the IF processing function, and the RF processing function of a traditional BS, it is easy to deploy the access device in an area near a wireless user. Because the access device is connected to the CS through cables, most signals are transmitted through cables, and buildings do not shield or reflect electromagnetic waves, and the quality of signal transmission is higher.

### Brief Description of the Drawings

FIG. 1 shows a schematic structure of a wireless communication system in the prior art;
FIG. 2 shows a schematic structure of a wireless communication system in an embodiment of the present invention;
FIG. 3 shows a schematic structure of a wireless communication system in a first embodiment of the present invention;
FIG. 4 shows a schematic structure of a wireless communication system in a second embodiment of the present invention;
FIG. 5 shows a schematic structure of a wireless communication system in a third embodiment of the present invention;
FIG. 6 shows a schematic structure of a wireless communication system in a fourth embodiment of the present invention;
FIG. 7 is a flowchart of a communication method in an embodiment of the present invention; and
FIG. 8 is a flowchart of a communication method in an embodiment of the present invention.

### Detailed Description of the Invention

First, the overall technical solution of the wireless communication system in an embodiment of the present invention is described below. A wireless communication system may include a CS capable of the BSC functions, and at least one access device controlled by the CS. The CS allocates resources to access devices uniformly. The CS is connected to the access devices through cables. The access device is adapted to: demodulate the wired signals of the CS to RF signals, send the RF signals to the destination wireless user, modulate the uplink RF signals from the wireless user to wired signals, and send the wired signals to the CS. The CS is adapted to: perform baseband processing, IF processing, and RF processing for the data provided by the core network to obtain RF signals, modulate the RF signals to wired signals, and send the wired signals to the access device corresponding to the destination wireless user of the data; demodulate the wired signals of the access device to RF signals, perform RF processing, IF processing and baseband processing for the RF signals to obtain the data sent by the wireless user, and submit the data to the core network. The wireless user mentioned herein may refer to a wireless user terminal.

The CS is connected to an access device through fibers. Therefore, optical signals are transmitted through the fiber link between the CS and the access device.

The CS may allocate resources to access devices uniformly. In other words, multiple access devices may share a CS, and may be controlled by a CS in a centralized way. The CS knows well the air interface resource conditions of all access devices under its control. For example, it is assumed that a CS controls three access devices whose coverage overlaps one another, and that a lot of air interface resources of one of the access devices are occupied . To ease the burden on the air interface resources, the CS may relocate some wireless users communicating with the access device in the overlapped coverage area to other two access devices, namely, make some wireless users communicate with other two access devices. Nevertheless, the CS may allocate resources for access devices uniformly by other means.

A CS may include an optical modulator, which is adapted to modulate the RF signals obtained through baseband processing, IF processing, and RF processing to optical signals available for being sent to the access device. The access device may also include an optical modulator, which is adapted to modulate the RF signals sent by the wireless user to optical signals available for being sent to the CS. The optical modulator may include an Electro-Optic Modulator (EOM) or a directly modulated Laser Diode (LD). The EOM may be a lithium niobate electro-optic modulator or a semiconductor Electro-Absorption Modulator (EAM). The LD may be a directly modulated semiconductor laser. Specially, the optical modulator may be an Electro-Absorption Transceiver (EAT), which is capable of modulating and demodulating signals. If the optical modulator of the CS is an EAT, the EAT in the CS may demodulate the optical signals from the access device to the RF signals. If the optical modulator of the access device is an EAT, the EAT in the access device may demodulate the optical signals from the CS to the RF signals.

Generally, the optical carrier used in modulating the downlink RF signals to optical signals is different from the optical carrier used in modulating the uplink RF signals to optical signals. Specifically, one multi-wavelength laser or two single-wavelength lasers emit two different optical carriers to achieve that purpose. It is understandable that the optical carrier used in modulating the downlink RF signals to optical signals may be the same as the optical carrier used in modulating the uplink RF signals to optical signals. In this case, one multi-wavelength laser or one single-wavelength laser emits an optical carrier to achieve that purpose.

The CS and/or the downlink fiber link may include an optical amplifier, which is adapted to amplify the downlink optical signals. The access device and/or uplink fiber link may also include an optical amplifier, which is adapted to amplify the uplink optical signals. Additionally, the downlink fiber link and/or the downlink fiber link may include a dispersion compensation apparatus, which is adapted to perform dispersion compensation for the optical signals.

The wireless communication system in an embodiment of the present invention is detailed below with reference to accompanying drawings.

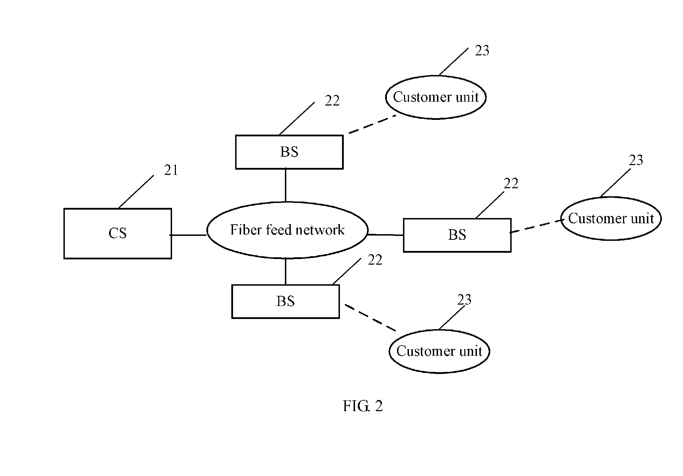

As shown in FIG. 2, the wireless communication system in this embodiment includes a CS 21 and more than one BS 22 under the CS's control. The BS herein is an access device, and the same applies to the following embodiments. The CS 21 is connected to more than one BS 22 through a fiber-feed network. Because the fiber-feed network is primarily made up of fibers, the CS 21 is connected to more than one BS 22 through fibers. The CS 21 is capable of not only the BSC functions, but also the baseband processing function, the IF processing function, and the RF processing function of the traditional BS. The BS 22 is not a traditional BS virtually, and is primarily responsible for conversion between an RF signal and an optical signal, and the antenna feeding and receiving of the RF signals.

For downlink information, the CS 21 obtains the data provided by the core network, and then performs baseband processing, IF processing and RF processing for the data to obtain RF signals. The CS 21 modulates the RF signals on optical carriers to generate optical signals. The optical signals are transmitted through fibers (namely, the fiber-feed network) to the BS 22 corresponding to the destination customer unit 23 of the data. The BS 22 demodulates the optical signals to obtain RF signals, and finally sends the RF signals to the destination customer unit 23. For uplink information, the source customer unit 23 sends RF signals to the corresponding BS 22. The BS 22 modulates the RF signals on the optical carriers to generate optical signals. The optical signals are transmitted through fibers to the CS 21. The CS 21 demodulates the optical signals to obtain RF signals, performs RF processing, IF processing and baseband processing for the RF signals to obtain the data available for being sent to the core network, and sends the data to the core network.

The CS 21 and the BS 22 may use an EOM or a directly modulated semiconductor LD to convert RF signals into optical signals. The EOM may be a lithium niobate electro-optic modulator or a semiconductor EAM. They are characterized by -3 dB bandwidth, high electrical-to-optical conversion efficiency, adjustable chirp features, and non-linear control, and are rather suitable for high-performance wireless communication systems that provide high bandwidths. The semiconductor electro-absorption modulator is characterized by low power consumption, high extinction ratio, and small size of components. Because the semiconductor electro-absorption modulator is made of class III-V semiconductor materials, a small-size semiconductor electro-absorption modulator may be monolithic integrated with the power-type microwave components such as an RF transmitting front-end amplifier and the semiconductor laser. Besides, the CS 21 and the BS 22 may use a Photo-Detector (PD) to convert optical signals to RF signals.

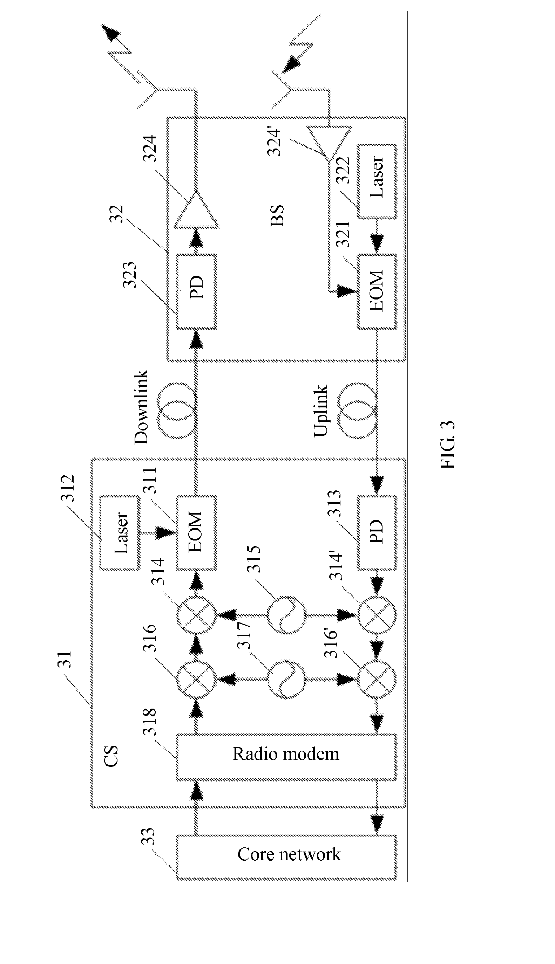

The CS and the BS may have diversified internal structures, as exemplified in FIG. 3. As shown in FIG. 3, the CS 31 includes: an EOM 311, a laser 312, a PD 313, an RF mixer 314, an RF mixer 314', an RF local oscillator 315, an IF mixer 316, an IF mixer 316', an IF signal generator 317, and a radio modem 318.

For downlink information, after the data provided by the core network 33 arrives at the radio modem 318, the radio modem 318 performs baseband processing for the data to obtain baseband signals, and sends the baseband signals to the IF mixer 316. The IF mixer 316 processes the baseband signals and the signals generated by the IF signal generator 317 to obtain IF signals, and sends the IF signals to the RF mixer 314. The RF mixer 314 processes the IF signals and the RF signals generated by the RF local oscillator 315 to obtain RF signals, and sends the RF signals to the EOM 311. The EOM 311 modulates the RF signals on the optical carrier emitted by the laser 312 to generate optical signals, and sends the optical signals to the BS 32 through fibers (namely, the downlink in FIG. 3).

For uplink information, after receiving the optical signals sent by the BS 32 through fibers (namely, the uplink in FIG. 3), the PD 313 demodulates the optical signals to obtain RF signals, and sends the RF signals to the RF mixer 314'. The RF mixer 314' processes the RF signals and the signals generated by the RF local oscillator 315 to obtain IF signals, and sends the IF signals to the IF mixer 316'. The IF mixer 316' processes the IF signals and the signals generated by the IF signal generator 317 to obtain baseband signals, and sends the baseband signals to the radio modem 318. The radio modem 318 processes the baseband signals to obtain the data available for being sent to the core network 33, and sends the data to the core network 33.

As shown in FIG. 3, the BS 32 includes: an EOM 321, a laser 322, a PD 323, an amplifying and filtering unit 324, and an amplifying and filtering unit 324'. For downlink information, after receiving the optical signals sent by the CS 31, the PD 323 demodulates the optical signals to obtain RF signals. The RF signals are amplified and filtered through the amplifying and filtering unit 324, and sent to the destination customer unit through the antenna. For uplink information, after the RF signals are received through the antenna, the RF signals are amplified and filtered through the amplifying and filtering unit 324', and arrive at the EOM 321. The EOM 321 modulates the amplified and filtered RF signals on the optical carrier emitted by the laser 322 to generate optical signals, and sends the optical signals to the CS 31.

The CS 31 needs to modulate the downlink RF signals on the optical carrier, and the BS 32 needs to modulate the uplink RF signals on the optical carrier. Therefore, in FIG. 3, a laser is set for each of the CS 31 and the BS 32 to emit optical carriers. In practice, however, a multi-wavelength laser or two single-wavelength lasers are set on the CS 31 or BS 32 only. The multi-wavelength laser or the two single-wavelength lasers may emit two different optical carriers, one of which is adapted to carry RF signals, and the other optical carrier carries none of RF signals. Instead, the other optical carrier arrives at the EOM of the peer, carries the RF signals sent by the peer, and arrives at the local PD. In this way, both the uplink information and the downlink information may be transmitted through two optical carriers emitted by a multi-wavelength laser or two single-wavelength lasers set on the CS 31 or BS 32.

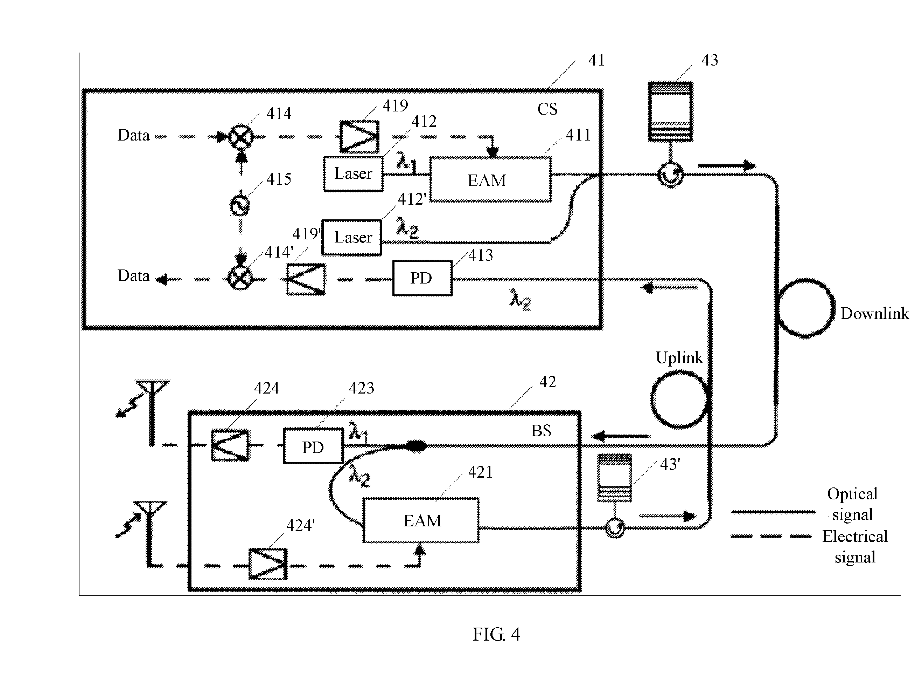

Specifically, as shown in FIG. 4, the CS 41 includes: an EAM 411, a laser 412, a laser 412', a PD 413, an RF mixer 414, an RF mixer 414', an RF local oscillator 415, an amplifying and filtering unit 419, and an amplifying and filtering unit 419'. Of course, the CS 41 further includes an IF processing part and a baseband processing part. Because the IF processing part and the baseband processing part are not the major points of this embodiment, they are not illustrated in FIG. 4. The BS 42 includes an EAM 421, a PD 423, an amplifying and filtering unit 424, and an amplifying and filtering unit 424'. In FIG. 4, the solid line with an arrow indicates the path of the optical signal, and the dotted line with an arrow indicates the path of the electric signal.

For downlink information, an RF signal generated by the RF mixer 414 is amplified and filtered by an amplifying and filtering unit 419, and arrives at the EAM 411. The EAM 411 modulates the RF signal on the optical carrier λ1 emitted by the laser 412 to generate an optical signal, and sends the optical signal to the BS 42 through a fiber (namely, the downlink in FIG. 4). The laser 412' emits an optical carrier λ2. The optical carrier λ2 does not pass through the EAM 411, but is transmitted to the BS 42 directly through the fiber. After arriving at the BS 42, the optical carrier λ1 is separated from the optical carrier λ2. The optical carrier λ1 is transmitted to the PD 423, and the optical carrier λ2 is transmitted to the EAM 421. After receiving the optical signal, the PD 423 demodulates the optical signal to obtain an RF signal. The RF signal is amplified and filtered by the amplifying and filtering unit 424, and sent to the destination customer unit through the antenna.

For uplink information, after the RF signal is received by the antenna and amplified and filtered by an amplifying and filtering unit 424', the RF signal arrives at the EAM 421 (a type of EOM). The EAM 421 modulates the amplified and filtered RF signal on the optical carrier λ2 to generate an optical signal, and sends the optical signal to the CS 41 through a fiber (namely, the uplink in FIG. 4). The PD 413 of the CS 41 demodulates the optical signal to obtain an RF signal. After being amplified and filtered by an amplifying and filtering unit 419', the RF signal arrives at the RF mixer 414'. The subsequent process is the same as the counterpart process in FIG. 3, and is not described further.

The transmission distance of the RF signals in the fiber is limited by the energy loss of the RF signal in the fiber-optic transmission process, the carrier suppression effect caused by fiber dispersion, and the distortion generated by the fiber non-linear effect. An optical amplifier may be set to improve the gain of the RF signal. A Fiber Bragg Grating (FBG) 43 and an FBG 43' may be set on the fiber links between the CS 41 and the BS 42 in FIG. 4 as compensators to compensate for the signal loss.

Two lasers 412 and 412' are set on the CS 41 in FIG. 4. In practice, it is practicable that only a multi-wavelength laser is set in the CS 41. It is also appropriate that two lasers or a multi-wavelength laser is set in the BS 42. The working mode of the laser in the BS 42 is the same as its working mode in the CS 41.

In FIG. 4, the EAM modulates the RF signal on the optical carrier, and the PD demodulates the optical signal. In practice, a special EAM, namely, an EAT, may be used to modulate and demodulate the signals. Because the EAT is capable of modulation and demodulation, the EAT may replace both the EAM and the PD in FIG. 4, thus simplifying the structure of the CS 41 and/or the BS 42 in FIG. 4.

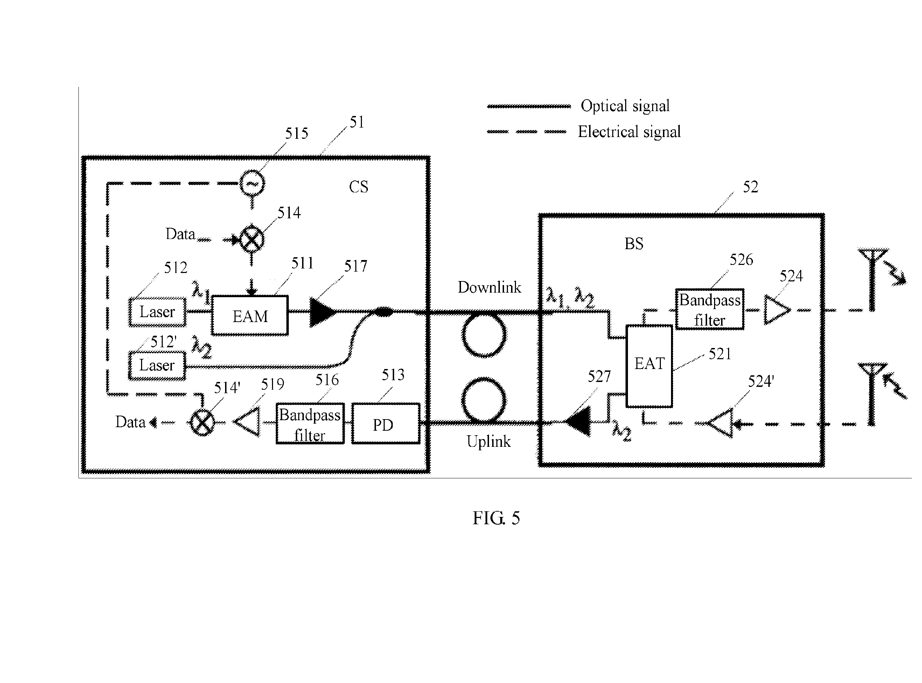

Specifically, as shown in FIG. 5, the CS 51 includes an EAM 511, a laser 512, a laser 512', a PD 513, an RF mixer 514, an RF mixer 514', an RF local oscillator 515, a bandpass filter 516, an optical amplifier 517, and an RF amplifier 519. Of course, the CS 51 further includes an IF processing part and a baseband processing part. Because the IF processing part and the baseband processing part are not the major points of this embodiment, they are not illustrated in FIG. 5. The BS 52 includes an EAT 521, an RF amplifier 524, an RF amplifier 524', a bandpass filter 526, and an optical amplifier 527. In FIG. 5, the solid line with an arrow indicates the path of the optical signal, and the dotted line with an arrow indicates the path of the electric signal.

For downlink information, an RF signal generated by the RF mixer 514 is sent to the EAM 511. The EAM 511 modulates the downlink RF signal on the optical carrier λ1 emitted by the laser 512 to generate an optical signal, and sends the optical signal to the BS 52 through a fiber (namely, the downlink in FIG. 5). In the transmission process, the optical signal is amplified by the optical amplifier 517. The laser 512' emits an optical carrier λ2. The optical carrier λ2 does not pass through the EAM 511, but is transmitted to the BS 52 directly through the fiber. After the optical carrier λ1 and the optical carrier λ2 arrive at the BS 52, the EAT 521 in the BS 52 demodulates the downlink RF signal over the optical carrier λ1 to obtain an RF signal. The RF signal is filtered by the bandpass filter 526 and amplified by the amplifier 524, and is transmitted to the destination customer unit through the antenna. After arriving at the EAT 521, the optical carrier λ2 is used to transmit uplink information.

For uplink information, after the RF signal is received by the antenna and amplified and filtered by the amplifier 524', the RF signal arrives at the EAT 521. The EAT 521 modulates the amplified and filtered RF signal on the optical carrier λ2 to generate an optical signal, and sends the optical signal to the CS 51 through a fiber (namely, the uplink in FIG. 5). In the transmission process, the optical signal is amplified by the optical amplifier 527. The PD 513 of the CS 51 demodulates the optical signal to obtain an RF signal. After being filtered by the bandpass filter 516 and amplified by the RF amplifier 519, the RF signal arrives at the RF mixer 514'. The subsequent process is the same as the counterpart process in FIG. 3, and is not described further.

Although the EAT is set in the BS 52 in FIG. 5, the EAT may be set in the CS 51 in practice, or an EAT is set in the CS 51 and another EAT is set in the BS 52. The working mode of the EAT in the CS 51 is the same as that in the BS 52.

In FIG. 4 and FIG. 5, the uplink information and the downlink information may be transmitted on the optical carriers of different wavelengths. In practice, however, the uplink information and the downlink information may be transmitted on the same optical carrier to improve the efficiency of utilizing the optical carrier resources and improve the system capacity.

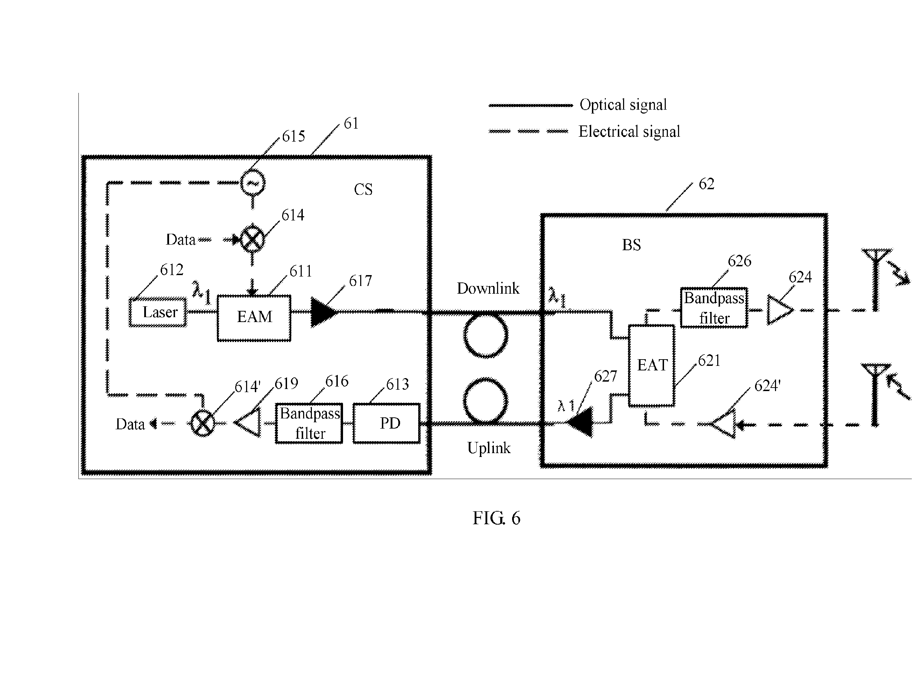

Specifically, as shown in FIG. 6, the CS 61 includes an EAM 611, a laser 612, a PD 613, an RF mixer 614, an RF mixer 614', an RF local oscillator 615, a bandpass filter 616, an optical amplifier 617, and an RF amplifier 619. Of course, the CS 61 further includes an IF processing part and a baseband processing part. Because the IF processing part and the baseband processing part are not the major points of this embodiment, they are not illustrated in FIG. 6. The BS 62 includes an EAT 621, an RF amplifier 624, an RF amplifier 624', a bandpass filter 626, and an optical amplifier 627. In FIG. 6, the solid line with an arrow indicates the path of the optical signal, and the dotted line with an arrow indicates the path of the electric signal.

For downlink information, after the RF signal generated by the RF mixer 614 is sent to the EAM 611, the EAM 611 modulates the RF signal on the optical carrier λ1 emitted by the laser 612 to generate an optical signal, and sends the optical signal to the BS 62 through a fiber (namely, the downlink in FIG. 6). In the transmission process, the optical signal is amplified by the optical amplifier 617. After the optical carrier λ1 arrives at the BS 62, the EAT 621 in the BS 62 demodulates the optical signal to obtain an RF signal. After being filtered by the bandpass filter 626 and amplified by the RF amplifier 624, the RF signal is transmitted to the destination customer unit through the antenna.

For uplink information, after the RF signal is received by the antenna and amplified by the RF amplifier 624', the RF signal arrives at the EAT 621. The EAT 621 modulates the amplified RF signal on the optical carrier λ1 to generate an optical signal, and sends the optical signal to the CS 61 through a fiber (namely, the uplink in FIG. 6). In the transmission process, the optical signal is amplified by the optical amplifier 627. The PD 613 of the CS 61 demodulates the optical signal to obtain an RF signal. After being filtered by the bandpass filter 616 and amplified by the RF amplifier 619, the RF signal arrives at the RF mixer 614'. The subsequent process is the same as the counterpart process in FIG. 3, and is not described further.

Although the laser is set in the CS 61 in FIG. 6, the laser may be set in the BS 62 in practice. The working mode of the laser in the BS 62 is the same as that in the CS 61.

In addition, two communication methods are provided herein. Both of the two communication methods are applicable to the wireless communication system that includes a CS and at least one access device controlled by the CS. The CS is connected to at least one access device through cables, and the access device communicates with the wireless user through RF signals.

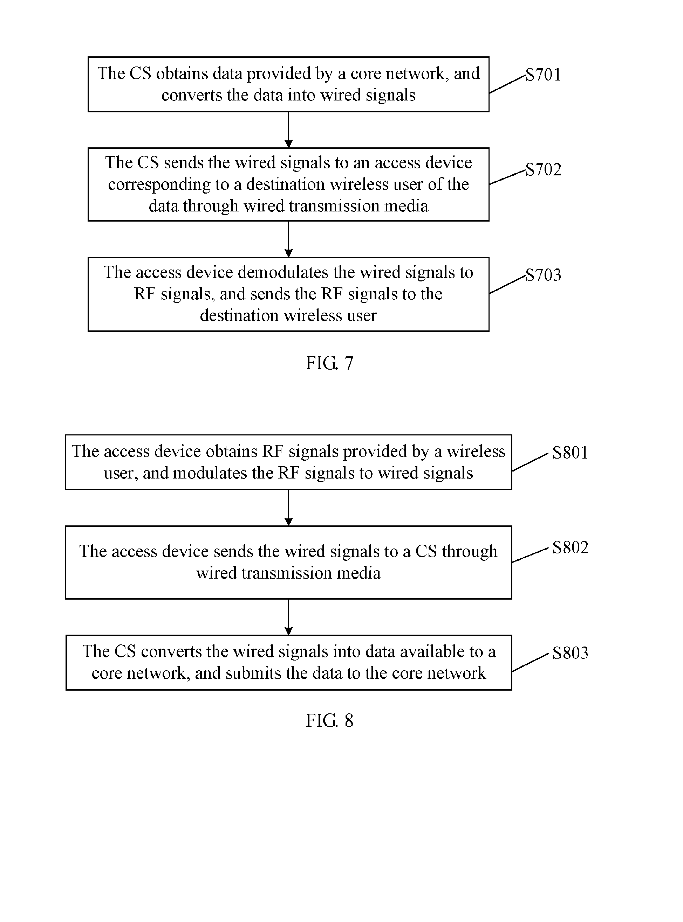

As shown in FIG. 7, a communication method includes:
S701. The CS obtains the data provided by a core network, and converts the data into wired signals.
S702. The CS sends the wired signals to an access device corresponding to a destination wireless user of the data through wired transmission media.
S703. The access device demodulates the wired signals to RF signals, and sends the RF signals to the destination wireless user.

The wired signals may be optical signals, and the wired transmission media may be fibers.

As shown in FIG. 8, another communication method includes:
S801. The access device obtains RF signals provided by a wireless user, and modulates the RF signals to wired signals.
S802. The access device sends the wired signals to a CS through wired transmission media.
S803. The CS converts the wired signals into data available to a core network, and submits the data to the core network.

The wired signals may be optical signals, and the wired transmission media may be fibers.

The specific implementation modes of the two communication methods above are similar to the embodiments shown in FIG. 2 to FIG. 6, and are not described further.

A CS is provided in an embodiment of the present invention. The CS includes: a modem unit, a baseband processing unit, an IF processing unit, and an RF processing unit. The baseband processing unit is adapted to convert the data provided by the core network into baseband signals; the IF processing unit is adapted to convert the baseband signals into IF signals; the RF processing unit is adapted to convert the IF signals into RF signals; the modem unit is adapted to modulate the RF signals to wired signals; the modem unit is further adapted to demodulate the wired signals to RF signals; the RF processing unit is further adapted to convert the RF signals into IF signals; the IF processing unit is further adapted to convert the IF signals into baseband signals; and the baseband processing unit is further adapted to convert the baseband signals into data available to the core network.

The wired signals may be optical signals. The modem unit may include an optical modulator and a PD. The optical modulator is adapted to modulate the RF signals obtained by the RF processing unit to optical signals; and the PD is adapted to demodulate the optical signals to RF signals available for being sent to the RF processing unit. The optical modulator may further include an EOM or directly modulated LD. The EOM may be a lithium niobate electro-optic modulator or a semiconductor EAM. The modem unit may be an EAT. The CS may further include a laser which is adapted to generate optical carriers. The CS may further include an amplifying and filtering unit, which is adapted to: amplify and filter the modulated RF signals, and/or amplify and filter the RF signals before demodulation. The amplifying and filtering unit may further include an amplifier and a bandpass filter. Nevertheless, the CS may have other structures, as illustrated in FIG. 3 to FIG. 6.

An access device (such as a BS) provided in an embodiment of the present invention includes a modem unit, which is adapted to modulate the RF signals provided by a wireless user to wired signals, and demodulate the obtained wired signals to RF signals available for being sent to the wireless user.

The wired signals may be optical signals. The modem unit may include an optical modulator and a PD. The optical modulator is adapted to modulate the RF signals provided by the wireless user to optical signals; and the PD is adapted to demodulate the optical signals to RF signals available for being sent to the wireless user. The modem unit may be an EAT. The BS may further include a laser which is adapted to generate optical carriers. The BS may further include an amplifying and filtering unit, which is adapted to: amplify and filter the modulated RF signals and/or amplify and filter the RF signals before demodulation. The amplifying and filtering unit may include an amplifier and a bandpass filter. Nevertheless, the BS may have other structures, as illustrated in FIG. 3 to FIG. 6.

In all the embodiments described above, to optimize the link gain of the RF signals, the wavelength and the optical power of optical carriers emitted by the laser may be adjusted; to optimize the linearity of the optical modulator transmission function, the working conditions related to the optical modulator may be adjusted; to optimize the demodulation result of the PD, the working conditions of the PD may be adjusted to optimize the detectivity.

In the communication system and the access device in an embodiment of the present invention, the access device is primarily capable of electrical-to-optical conversion and/or optical-to-electrical conversion, and is characterized by a simple structure, low power consumption, and cost-efficiency. Therefore, the access devices can be deployed in most areas, especially the areas unsuitable for deploying a traditional BS for cost and power reasons in a broadband wireless communication system, for example, indoor areas.

In the communication system in an embodiment of the present invention, the access device is connected to the CS through cables, and the access device can be closer to the wireless user. Therefore, the signal loss in the transmission process is low, and the signal quality and the transmission distance are improved.

In the communication system in an embodiment of the present invention, multiple compact access devices share the resources of a CS, and are controlled by the CS in a centralized way. Therefore, the data of different rates and different formats may be transmitted transparently, and the network and frequency resources are managed dynamically and allocated optimally, thus facilitating network upgrade and reducing the cost of installation and maintenance.

In all embodiments of the present invention, the signals may be combined and split in multiple channels, and multiple multiplexing/demultiplexing technologies may be applied to increase the information capacity supportable by the wireless communication system.

Further, if the modulation and the demodulation of optical signals and electrical signals are performed through an EAT, and the signals are modulated through the optical carriers emitted by one laser, the structures of the CS and the access device are simplified and the cost is further reduced.

Further, an amplifier applied on the optical link further improves the signal gain, the signal transmission distance and the signal transmission quality, and a dispersion compensator applied to compensate for the signal loss further improves the signal transmission distance and the signal transmission quality.

Further, if an EOM (such as a lithium niobate electro-optic modulator or a semiconductor EAM) is applied to modulate the optical signals, the overall performance of the wireless communication system is further improved because the EOM is characterized by high electrical-to-optical conversion efficiency, adjustable chirp features, and non-linear control.

Notes:
1. The embodiments of the present invention may be completely applicable to the pico-cell structure or femto-cell structure in the future.
   In an urban environment, buildings reflect electromagnetic waves, and the buildings on the ground and under the ground shield electromagnetic waves. Therefore, it is difficult to achieve high-bandwidth and high-quality radio signal transmission and achieve high-quality indoor radio signal coverage in the urban area, and the networking of the urban broadband radio network is rather complicated. To solve the problems existent in the ultra wideband wireless communication system applied in the indoor areas and urban areas, the pico-cell and femto-cell structures with small coverage areas will be applied in the future ultra wideband radio access systems. The reduced coverage area of the cell improves flexibility of the system networking, reduces complexity of the mobile environment, relieves the impact caused by the multi-path fading to the system greatly, and relieves the inter-symbol interference caused by the multi-path effect greatly.
   In the embodiments of the present invention, the access device is a BS characterized by a simple structure and easy deployment. It is easy to deploy a large number of access devices in the urban area and accomplish the cellular structures of small coverage areas. The access device is connected to the CS through cables, thus relieving the impact caused by the multi-path fading to the system greatly, and relieving the inter-symbol interference caused by the multi-path effect greatly. Therefore, the embodiments of the present invention are completely applicable to the pico-cell structure or femto-cell structure in the future.
2. The embodiments of the present invention completely fulfill the millimeter-wave wireless communication requirements.
   Currently, the transmission rate of the first-generation mobile telecommunications system and the second-generation mobile telecommunications system is only 10 Kbps to over 100 Kbps, and the transmission rate of the 3^{rd} generation (3G) mobile telecommunications system based on Code Division Multiple Access (CDMA) is only of an Mbps magnitude. To implement the ultra wideband wireless communication in the future, the 4^{th} generation (4G, also known as a B3G) mobile telecommunications system is developed. The 4G employs completely new wireless transmission technologies, and supports the information transmission rate of a 100 Mbps and even Gbps magnitude. Such ultra wideband wireless communication systems support telephone services, mass data services, and the broadband multimedia services represented by the high definition television, and can fulfill people's requirements for mobile broadband access in the future.
   With the increase of the transmission rate of the wireless communication data, the working frequency of the radio carrier needs to be increased in the future to improve the capacity of the wireless communication system. Nevertheless, the working frequencies of most wireless communication services are less than 5 GHz, and resources of the low frequency band frequencies have almost been used up. Like the demand for the Central Processing Unit (CPU) and the memory of a computer, the demand for the radio spectrum is increasing in the wireless communication field. The integrated communication system of a higher working efficiency is more capable of resisting interference and implementing confidential communications reliably.

In the past few years, the millimeter band such as a 7 GHz spectrum bandwidth near 60 GHz is a spectrum resource that is available without authorization. In America, this spectrum scope is 57-64 GHz; and in Japan, this spectrum scope is 59-66 GHz. Moreover, the millimeter wave integration technology at the working frequency of 94 GHz has been applied to the special fields such as all-weather high-resolution millimeter wave passive imaging and precise positioning in the national defense of some countries. Although the millimeter band such as 60 GHz is not a transmission window of the electromagnetic wave in the atmosphere, its application in the short-distance wireless communication is undoubtedly promising, including the high-speed Gbps point-to-point data transmission, wireless local area networks of ultra-large capacity, personal short-distance high-speed data transmission networks, and millimeter wave crashworthy radar for vehicles. Currently, the researchers in all countries over the world regard the wireless communication based on the millimeter wave band as a trend of the future wireless communication.

However, the millimeter wave communication technology is defective. That is, the millimeter wave signals suffer huge losses while being propagated in the atmosphere due to absorption and reflection. Because the embodiments of the present invention use the simply structured and easily deployable BS as an access device, and the access device is connected to the CS through cables, the losses suffered by the millimeter wave signals propagated in the atmosphere are reduced massively. If the access devices are deployed properly, the losses can be even near zero. Therefore, the embodiments of the present invention are applicable to the millimeter wave wireless communication and completely fulfill the millimeter wave wireless communication technologies in the future.

It is understandable to those skilled in the art that all or part of the steps of the foregoing embodiments may be implemented by hardware instructed by a computer program. The program may be stored in a computer-readable storage medium. When being executed, the program performs the processes covered in the foregoing embodiments. The storage medium may be a magnetic disk, a Compact Disk (CD), a Read-Only Memory (ROM), or a Random Access Memory (RAM).

Although the invention is described through several exemplary embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A wireless communication system, comprising:
a central station, CS, capable of functions of a base station controller, BSC, and at least one access device controlled by the CS, wherein, the CS is connected to the at least one access device through cable;
the at least one access device is configured to demodulate downlink wired signals sent by the CS to downlink radio frequency, RF, signals, send the downlink RF signals to a destination wireless user, modulate uplink RF signals sent by the wireless user to uplink wired signals, and send the uplink wired signals to the CS;
the CS is configured to perform baseband processing, intermediate frequency, IF, processing and RF processing for the data provided by a core network to obtain downlink RF signals, modulate the downlink RF signals to downlink wired signals, send the downlink wired signals to the access device corresponding to the destination wireless user of the data provided by the core network, demodulate the uplink wired signals sent by the access device to uplink RF signals, perform RF processing, IF processing and baseband processing for the uplink RF signals to obtain the data sent by the wireless user, and submit the data sent by the wireless user to the core network.

2. The wireless communication system of claim 1, wherein, the CS is connected to the access device through fiber, and the downlink or uplink wired signals are optical signals.

3. The wireless communication system of claim 2, wherein, optical carriers which the CS uses to modulate the downlink RF signals to the downlink optical signals are the same as those which the access device uses.

4. The wireless communication system of claim 2, wherein, the CS or the downward fiber link or each of the CS and the downward fiber link comprises an optical amplifier, configured to amplify the downlink optical signals.

5. The wireless communication system of claim 2, wherein, the access device or the upward fiber link or each of the access device and the upward fiber link comprises an optical amplifier, configured to amplify the uplink optical signals.

6. The wireless communication system of claim 2, wherein, the downward fiber link comprises a dispersion compensation apparatus, configured to perform dispersion compensation for the downlink optical signals, and/or the upward fiber link comprises a dispersion compensation apparatus, configured to perform dispersion compensation for the uplink optical signals.

7. A central station, CS, comprising a modem unit, a baseband processing unit, an intermediate frequency, IF, processing unit, and a radio frequency, RF, processing unit, wherein,
the baseband processing unit is configured to convert the data provided by a core network into downlink baseband signals;
the IF processing unit is configured to convert the downlink baseband signals into downlink IF signals;
the RF processing unit is configured to convert the downlink IF signals into downlink RF signals;
the modem unit is configured to modulate the downlink RF signals to downlink wired signals;
the modem unit is further configured to demodulate uplink wired signals to uplink RF signals;
the RF processing unit is further configured to convert the uplink RF signals into uplink IF signals;
the IF processing unit is further configured to convert the uplink IF signals into uplink baseband signals; and
the baseband processing unit is further configured to convert the uplink baseband signals into the data available to the core network.

8. The CS of claim 7, wherein, the downlink or uplink wired signals are optical signals.

9. The CS of claim 8, wherein, the modem unit comprises an optical modulator and a photo-detector, PD, wherein,
the optical modulator is configured to modulate the downlink RF signals obtained by the RF processing unit to the downlink optical signals, and
the PD is configured to demodulate the uplink optical signals to the uplink RF signals available for being sent to the RF processing unit.

10. The CS of claim 9, wherein, the optical modulator comprises an electro-optic modulator, EOM, or a directly modulated laser diode, LD.

11. The CS of claim 10, wherein, the EOM is a lithium niobate electro-optic modulator or a semiconductor electro-absorption modulator, EAM.

12. The CS of claim 8, wherein, the modem unit is an electro-absorption transceiver, EAT.

13. An access device, comprising,
a modem unit, configured to modulate uplink radio frequency, RF, signals provided by the wireless user to uplink wired signals, and demodulate obtained downlink wired signals to downlink RF signals available for being sent to the wireless user.

14. The access device of claim 13, wherein, the uplink or downlink wired signals are optical signals.

15. The access device of claim 14, wherein, the modem unit comprises an optical modulator and a photo-detector, PD, wherein,
the optical modulator is configured to modulate the uplink RF signals provided by the wireless user to the uplink optical signals, and
the PD is configured to demodulate the downlink optical signals to the downlink RF signals available for being sent to the wireless user.

16. The access device of claim 14, wherein, the modem unit is an electro-absorption transceiver, EAT.

17. The access device of claim 14, further comprising,
an amplifying and filtering unit, configured to amplify and filter modulated RF signals and/or RF signals before being demodulated.

18. The access device of claim 17, wherein, the amplifying and filtering unit comprises an amplifier and a bandpass filter.

19. A communication method, comprising,
obtaining, by a central station, CS, data provided by a core network, and converting the data into wired signals;
sending, by the CS, the wired signals to an access device corresponding to a destination wireless user of the data through wired transmission media; and
demodulating, by the access device, the wired signals to radio frequency, RF, signals, and sending the RF signals to the destination wireless user.

20. The communication method of claim 19, wherein, the wired signals are optical signals and the wired transmission media is fiber.

21. A communication method, comprising,
obtaining, by an access device, radio frequency, RF, signals provided by a wireless user, and modulating the RF signals to wired signals;
sending, by the access device, the wired signals to a central station, CS, through wired transmission media; and,
converting, by the CS, the wired signals into data available to a core network, and submitting the data to the core network.

22. The communication method of claim 19, wherein, the wired signals are optical signals and the wired transmission media is fiber.
